# EUROPÄISCHE PATENTANMELDUNG

(11) **EP 0 964 280 A2**
(43) Veröffentlichungstag der Anmeldung: **15.12.1999**
(21) Anmeldenummer: 99401256.5
(22) Anmeldetag: 25.05.1999
(51) Int. Cl.: G02B 6/44

(54) **Optische Faser und Verfahren zum Kennzeichnen einer optischen Faser**

(30) Priorität: 12.06.1998 DE 19826301
(71) Anmelder: ALCATEL, 75008 Paris (FR)
(72) Erfinder: Rosenkranz, Jürgen, Dr., 41068 Mönchengladbach (DE); Reiners, Wilhelm, Dr., 41844 Wegberg (DE); Bartling, Franz-Peter, 40221 Düsseldorf (DE); Glessner, Bertram, 41199 Mönchengladbach (DE)
(74) Vertreter: Döring, Roger, Dipl.-Ing.

(57) **Zusammenfassung**

Eine optische Faser (1) hat eine ein- oder zweischichtige Schutzschicht (7) sowie eine farbige Kennzeichnung. Die farbige Kennzeichnung wird durch zumindest eine gefärbte Schicht (11) der Schutzschicht (7) sowie auf die Schutzschicht (7) aufgebrachte farbige Markierungen (13) gebildet. Auf diese Weise ist eine Vielzahl von verschiedenen Kennzeichnungen optischer Fasern (1) einfach und kostengünstig herstellbar (Fig.).

## Beschreibung

Die Erfindung betrifft eine optische Faser mit einer ein- oder zweischichtigen Schutzschicht und einer farbigen Kennzeichnung bzw. ein Verfahren zum Kennzeichnen einer optischen Faser.

Aus Glaskörpern, den sogenannten Preforms, gezogene optische Glasfasern für die Nachrichtenübertragung müssen vor ihrer Weiterverarbeitung mit einer Schutzschicht, dem sogenannten Coating, versehen werden, um eine ausreichend große Festigkeit der Faser sicherzustellen, sie vor äußeren Einflüssen zu schützen und so ihre Handhabung zu vereinfachen. Zu diesem Zweck werden ein oder in der Regel zwei Überzüge, beispielsweise aus einem polymeren Material, auf den Mantel der optischen Glasfaser aufgebracht. Die Schutzschicht muß sich über die gesamte Länge der Faser gleichmäßig ohne Unterbrechung oder wesentliche Dickenänderung erstrecken, damit Dämpfungserhöhungen der optischen Faser vermieden werden.

Weist die Schutzschicht eine innere Primärschicht und eine äußere Sekundärschicht auf, so unterscheiden sich diese regelmäßig in ihren Eigenschaften. Das Material der Primärschicht wird so gewählt, daß sie ein weiches Polster zum Schutz der Faser vor zu Dämpfungserhöhungen führenden Mikrokrümmungen bildet. Die mechanisch feste Sekundärschicht schützt die Faser vor mechanischen Kräften und anderen äußeren Einflüssen.

Sind in einem optischen Kabel eine Vielzahl so geschützter optischer Glasfasem vorhanden, so ist es ohne zusätzlich vorgesehene Maßnahmen schwierig und aufwendig, bei der Montage des Kabels die einzelnen optischen Fasern zu identifizieren. Zu diesem Zweck ist es bekannt, die auch als Coating bezeichnete Schutzschicht der optischen Faser allseitig mit einer zusätzlichen, Farbpigmente enthaltenden Farbschicht zu versehen. Bei einer größeren Anzahl von Fasern reicht aber auch ein solcher jede optische Faser umschließender Farbauftrag nicht aus, um die einzelnen Fasern eines Kabels mit Sicherheit auseinander halten zu können.

Aus diesem Grund hat man bereits, wie aus der DE 89 09 842 U1 bekannt ist, optische Fasern gleicher Farbgebung mit einer zusätzlichen Ringsignierung versehen, wobei die Anzahl der zusammengehörigen ringförmigen Markierungen bzw. deren Abstand voneinander variiert werden kann. Bei diesem Kennzeichnungsverfahren wird eine bereits mit einer Schutzschicht, dem sogenannten Coating, versehene, auf einer Ablaufspule aufgewickelte optische Faser von dieser abgezogen und zunächst in einer Färbeeinrichtung kontinuierlich eingefärbt. Nach dem Trocknen des aufgebrachten Lackes wird die eingefärbte optische Faser durch Räder umgelenkt und gelangt in eine Signiereinrichtung, in der auf die Oberfläche der kontinuierlich eingefärbten optischen Faser ringförmige Markierungen aus einem andersfarbigen Lack aufgebracht werden.

Dieses bekannte Verfahren weist den Nachteil einer vergleichsweise aufwendigen Herstellung der zur eindeutigen Identifizierung optischer Fasem erforderlichen Kennzeichnung auf.

Ausgehend von diesem Stand der Technik liegt der Erfindung das Problem zugrunde, eine optische Faser, insbesondere eine optische Glasfaser, auf möglichst einfache Art und Weise mit einer zur Identifizierung der Faser dienenden farbigen Kennzeichnung zu versehen, ohne daß es zu einer Verschlechterung der optischen Übertragungseigenschaften der optischen Faser kommt.

Dieses Problem wird durch die Erfindung gelöst, indem zumindest eine Schicht der Schutzschicht gefärbt ist und auf die Schutzschicht farbige Markierungen aufgebracht sind, bzw. die optische Faser mit einer ein- oder zweischichtigen Schutzschicht versehen wird, wobei zumindest eine Schicht dieser Schutzschicht gefärbt ist, und auf die Schutzschicht farbige Markierungen aufgebracht werden.

Die durch die Erfindung erzielbaren Vorteile bestehen insbesondere darin, daß die optische Faser auf einfache Art und Weise mit einer kontinuierlichen Einfärbung sowie mit farbigen Markierungen zur eindeutigen Identifizierung der optischen Faser aus einer Vielzahl von optischen Fasem versehen ist. Die erfindungsgemäße optische Faser weist bereits unmittelbar nach dem Faserziehen durch das Aufbringen der durch den Zusatz von Farbpigmenten eingefärbten Schicht der Schutzschicht eine erste farbige Kennzeichnung auf. Durch den Zusatz der Farbpigmente zu einer der Schichten der auch als Coating bezeichneten Schutzschicht ist zudem über die gesamte Faserlänge eine dauerhaft beständige und unterscheidbare farbige Kennzeichnung der optischen Faser geschaffen, ohne daß die Gefahr eines Ausbleichens der Farbe durch Alterung oder eines unbeabsichtigten Entfernens der Farbe durch Reinigungschemikalien besteht. Darüber hinaus entfällt durch Verwendung des eingefärbten Coatings das bisher erforderliche zusätzliche Aufbringen einer Farbschicht, das zu Ungleichmäßigkeiten an der Oberfläche der optischen Faser, insbesondere zu Wanddickenunterschieden, die ihrerseits Mikrokrümmungen verursachen können, oder zu anderen negativen Einflüssen führen kann.

In einem weiteren Schritt werden dann als zweite farbige Kennzeichnung auf diese farblich gekennzeichnete Schutzschicht farbige Markierungen aufgebracht, die die Identifizierung jeder einzelnen Faser aus einer Gruppe von optischen Fasern weiter vereinfachen.

Durch die in den Unteransprüchen aufgeführten Merkmale sind vorteilhafte Weiterbildungen und Verbesserungen der Erfindung möglich.

Von Vorteil ist es, wenn über den farbigen Markierungen eine sich über die Länge der optischen Faser erstreckende Überzugsschicht aufgebracht ist, die als zusätzlicher Oberflächenschutz gegen Feuchtigkeit und Lösemittel dient, den mechanischen Abrieb der farbigen Markierungen von der Schutzschicht der optischen Faser verhindert und eine glatte Oberfläche mit vergleichmäßigtem Außendurchmesser bildet.

Damit die unterhalb der Überzugsschicht liegenden farbigen Markierungen sowie die gefärbte Schicht der Schutzschicht eindeutig erkennbar sind, ist es von Vorteil, wenn die Überzugsschicht aus einem durchsichtigen oder durchscheinenden Beschichtungsmaterial ausgebildet ist. Dabei ist es vorteilhaft, wenn die Überzugsschicht aus einem klaren Beschichtungsmaterial ausgebildet ist oder die Überzugsschicht die gleiche Farbe wie die gefärbte Schicht der Schutzschicht aufweist. Im Falle eines klaren Beschichtungsmaterials ist es möglich, für die Überzugsschicht nur ein einziges Beschichtungsmaterial zu verwenden. Aufwendige Farbwechsel des für die Überzugsschicht verwendeten Beschichtungsmaterials oder eine Vielzahl von Fertigungslinien zum Aufbringen von Überzugsschichten verschiedener Farben werden vermieden, so daß eine rationelle Fertigung der durchgehend farblich gekennzeichneten, zusätzlich mit farbigen Markierungen versehenen und von einer Überzugsschicht umschlossenen optischen Faser möglich ist.

Für eine einfache und sichere Identifizierung der einzelnen optischen Fasern ist es von Vorteil, wenn die auf die Schutzschicht (Coating) aufgebrachten farbigen Markierungen durch farbige Ringe gebildet sind.

Um die Dämpfung der mit farbigen Ringen markierten optischen Fasern zu verringern, ist es von Vorteil, wenn die farbigen Markierungen durch offene farbige Ringe gebildet sind. Eine darüber aufgebrachte Überzugsschicht läßt offene Ringe optisch als Vollring erscheinen.

Bei einer zweischichtigen Schutzschicht (Coating) der optischen Faser ist es von Vorteil, wenn die äußere Sekundärschicht der Schutzschicht gefärbt ist. Durch diese Maßnahme läßt sich die Farbe der eingefärbten Schicht der Schutzschicht auch beim Aufbringen einer weiteren Schicht über den Markierungen gut identifizieren. Zudem bleiben die optischen Eigenschaften der optischen Faser unverändert.

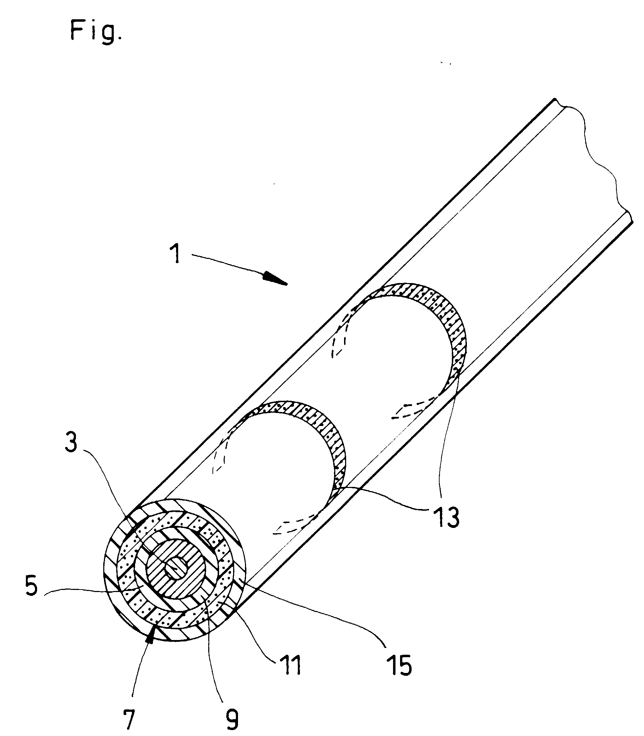

Ein Ausführungsbeispiel der Erfindung ist in der Zeichnung vereinfacht dargestellt und in der nachfolgenden Beschreibung näher erläutert.

Die in der Figur beispielhaft dargestellte optische Faser 1, bei der es sich um eine optische Glasfaser handelt, weist einen zentralen Kem 3 und einen diesen umschließenden Mantel 5 auf, die beide aus optisch transparentem Quarzglas bestehen. Um zu Dämpfungserhöhungen führende Mikrokrümmungen der optischen Faser 1 zu vermeiden und die optische Faser 1 vor äußeren Einflüssen zu schützen, ist der Mantel 5 der optischen Faser von einer üblicherweise als Coating bezeichneten Schutzschicht 7 umschlossen. Diese Schutzschicht 7 besteht bei dem in der Figur dargestellten Ausführungsbeispiel aus einer inneren Primärschicht 9 und einer äußeren Sekundärschicht 11, die sich in ihren mechanischen Eigenschaften unterscheiden. Primärschicht 9 und Sekundärschicht 11 werden unmittelbar nach dem Ziehen der optischen Faser 1 auf die optische Faser aufgebracht und bestehen beispielsweise aus durch UV-Licht aushärtbaren Beschichtungsmaterialien. Wie in der Figur durch Punkte angedeutet ist, ist die Sekundärschicht 11 durch in das Beschichtungsmaterial eingebettete Farbpigmente, die einen Bestandteil der Sekundärschicht 11 bilden, über ihre gesamte Länge gleichmäßig eingefärbt. Auf die gefärbte Sekundärschicht 11 der Schutzschicht 7 sind farbige Markierungen 13 aufgebracht, wobei die in das Material der farbigen Markierungen 13 eingebetteten Farbpigmente wiederum durch Punkte angedeutet sind. Um eine gute Erkennbarkeit der Markierungen zu gewährleisten und dabei Dämpfungserhöhungen zu vermeiden, sind die Markierungen 13 als offene Ringe ausgebildet und erstrecken sich in Umfangsrichtung jeweils beispielsweise über etwas mehr als die Hälfte des Umfangs der optischen Faser 1.

Über den farbigen Markierungen 13 ist eine sich über die gesamte Länge der optischen Faser 1 erstreckende und diese umschließende Überzugsschicht 15 aufgebracht, die eine glatte Oberfläche mit vergleichmäßigtem Außendurchmesser der gekennzeichneten optischen Faser 1 schafft. Diese Überzugsschicht 15 dient zudem als Schutz der Markierungen 13 gegen Abrieb und Alterung sowie als zusätzlicher Oberflächenschutz gegen Feuchtigkeit und Lösemittel. Die Überzugsschicht 15 ist beispielsweise aus einem klaren Beschichtungsmaterial ausgebildet, so daß sich ohne Probleme die Art und Farbe der Markierungen 13 sowie die Farbe der gefärbten Sekundärschicht 11 erkennen läßt. Es ist aber ebenfalls möglich, daß die Überzugsschicht 15 aus einem durchscheinenden Beschichtungsmaterial ausgebildet ist, das die gleiche Farbe wie die gefärbte Sekundärschicht 11 der Schutzschicht 7 aufweist.

Durch die Kombination der farbigen äußeren Sekundärschicht 11 der auch als Coating bezeichneten Schutzschicht 7 und der auf die Schutzschicht 7 aufgebrachten farbigen Markierungen 13 wird erreicht, daß in der Regel nur noch ein, nämlich ein klarer, durch UV-Licht aushärtbarer Lack für die Überzugsschicht 15 erforderlich ist, selbst wenn einzelne optische Fasem 1 aus einer Vielzahl von optischen Fasern heraus identifiziert werden müssen. Dadurch werden aufwendige Farbwechsel bzw. eine Vielzahl von parallelen Fertigungslinien mit unterschiedlichen Farben zum kontinuierlichen Aufbringen von farbigen Überzugsschichten auf die optischen Fasern vermieden.

Bei der Herstellung der erfindungsgemäßen optischen Faser 1 wird auf deren Mantel 5 unmittelbar nach dem Faserziehprozeß und einer entsprechenden Abkühlung der optischen Faser 1 eine Primärschicht 9 und auf diese eine durch eingelagerte Farbpigmente eingefärbte Sekundärschicht 11 aufgebracht, wobei Primärschicht 9 und Sekundärschicht 11 gemeinsam die Schutzschicht 7, die auch als Coating bezeichnet wird, bilden. Primärschicht 9 und Sekundärschicht 11 unterscheiden sich regelmäßig in ihren mechanischen Eigenschaften. Die Primärschicht 9 ist in der Regel aus einem vergleichsweise weichen Material ausgebildet, um die optische Faser 1 vor Mikrokrümmungen zu schützen. Die Sekundärschicht 11 dagegen stellt eine mechanisch feste Schicht dar, die das Biegen der optischen Faser 1 erlaubt und zudem zu ihrem mechanischen Schutz und Oberflächenschutz beiträgt. Nach dem Aufbringen der Sekundärschicht 11 und dem Aushärten derselben z. B. durch UV-Licht wird die nun mit einer Schutzschicht 7 versehene, farblich gekennzeichnete optische Faser 1 beispielsweise auf einem Aufwickelteller abgelegt. In einem weiteren Arbeitsschritt werden dann zur weiteren Kennzeichnung auf die Sekundärschicht 11 der Schutzschicht 7 farbige Markierungen 13 beispielsweise in Form von offenen Ringen aufgebracht, wobei diese Ringe verschiedene Breiten und verschiedene Abstände aufweisen können. Über diesen Markierungen 13 wird eine sich über die gesamte Länge der beschichteten optischen Faser 1 erstreckende, die Faser umschließende Überzugsschicht 15 aufgebracht. Bei der Auswahl des Beschichtungsmaterials der Überzugsschicht 15 muß sichergestellt sein, daß die darunter liegenden Markierungen 13 sowie die Farbe der Sekundärschicht 11 erkennbar sind. Dies läßt sich am einfachsten dadurch erreichen, daß die Überzugsschicht 15 aus einem klaren Beschichtungsmaterial ausgebildet wird.

## Patentansprüche

1. Optische Faser mit einer ein- oder zweischichtigen Schutzschicht (7) und einer farbigen Kennzeichnung (11, 13), **dadurch gekennzeichnet,** daß zumindest eine Schicht (11) dieser Schutzschicht (7) gefärbt ist und auf die Schutzschicht (7) farbige Markierungen (13) aufgebracht sind.

2. Optische Faser nach Anspruch 1, **dadurch gekennzeichnet,** daß über den farbigen Markierungen (13) eine sich über die Länge der optischen Faser (1) erstreckende Überzugsschicht (15) aufgebracht ist.

3. Optische Faser nach Anspruch 2, **dadurch gekennzeichnet,** daß die Überzugsschicht (15) aus einem durchsichtigen oder durchscheinenden Beschichtungsmaterial ausgebildet ist.

4. Optische Faser nach Anspruch 2 oder 3, **dadurch gekennzeichnet,** daß die Überzugsschicht (15) aus einem klaren Beschichtungsmaterial ausgebildet ist.

5. Optische Faser nach Anspruch 2 oder 3, **dadurch gekennzeichnet,** daß die Überzugsschicht (15) die gleiche Farbe wie die gefärbte Schicht (11) der Schutzschicht (7) aufweist.

6. Optische Faser nach einem der Ansprüche 1 bis 5, **dadurch gekennzeichnet,** daß die farbigen Markierungen (13) durch farbige Ringe gebildet sind.

7. Optische Faser nach einem der Ansprüche 1 bis 6, **dadurch gekennzeichnet,** daß die farbigen Markierungen (13) durch offene farbige Ringe gebildet sind.

8. Optische Faser mit einer zweischichtigen Schutzschicht (7) nach einem der Ansprüche 1 bis 7, **dadurch gekennzeichnet,** daß die äußere Sekundärschicht (11) der Schutzschicht (7) gefärbt ist.

9. Verfahren zum farbigen Kennzeichnen einer optischen Faser (1), bei dem die optische Faser (1) mit einer ein- oder zweischichtigen Schutzschicht (7) versehen wird, wobei zumindest eine Schicht (11) dieser Schutzschicht (7) gefärbt ist, und auf die Schutzschicht (7) farbige Markierungen (13) aufgebracht werden.

10. Verfahren nach Anspruch 9, **dadurch gekennzeichnet,** daß über den farbigen Markierungen (13) eine sich über die Länge der optische Faser (1) erstreckende Überzugsschicht (15) aufgebracht wird.
